# EUROPÄISCHE PATENTSCHRIFT

(11) **EP 1 299 219 B1**
(45) Veröffentlichungstag und Bekanntmachung des Hinweises auf die Patenterteilung: **06.10.2004**
(21) Anmeldenummer: 01954028.5
(22) Anmeldetag: 11.07.2001
(51) Int. Cl.: B29C 44/04

(54) **VERFAHREN ZUR HERSTELLUNG VON FORMTEILEN AUS PARTIKELSCHAUM MIT EINER DECKSCHICHT**
METHOD FOR PRODUCING MOULDED PARTS MADE OF PARTICLE FOAM AND COMPRISING A COVERING LAYER
PROCEDE DE FABRICATION DE PIECES MOULEES EN MOUSSE PARTICULAIRE DOTEES D'UNE COUCHE DE COUVERTURE

(30) Priorität: 12.07.2000 DE 10033877
(43) Veröffentlichungstag der Anmeldung: 09.04.2003
(73) Patentinhaber: Fraunhofer-Gesellschaft zur Förderung der angewandten Forschung e.V., 80686 München (DE)
(72) Erfinder: ZIEGLER, Maik, 99887 Gräfenhain (DE); KAUFFMANN, Axel, 71263 Weil d. Stadt (DE); HOFMANN, Knut, 75015 Bretten (DE); ZIEGLER, Lars, 73119 Zell (DE); EYERER, Peter, 76228 Karlsruhe (DE); ELSNER, Peter, 76327 Pfinztal (DE)
(86) Internationale Anmeldenummer: PCT/EP2001/007975
(87) Internationale Veröffentlichungsnummer: WO 2002/004188

(56) Entgegenhaltungen:
- DE-U- 8 501 075
- US-A- 4 582 658
- PATENT ABSTRACTS OF JAPAN vol. 012, no. 149 (M-694), 10. Mai 1988 (1988-05-10) & JP 62 270326 A (KANEGAFUCHI CHEM IND CO LTD), 24. November 1987 (1987-11-24)
- PATENT ABSTRACTS OF JAPAN vol. 004, no. 169 (M-043), 21. November 1980 (1980-11-21) & JP 55 118838 A (BADISCHE YUKA CO LTD), 12. September 1980 (1980-09-12)
- PATENT ABSTRACTS OF JAPAN vol. 009, no. 183 (M-400), 30. Juli 1985 (1985-07-30) -& JP 60 049927 A (KANEGAFUCHI KAGAKU KOGYO KK), 19. März 1985 (1985-03-19)

## Beschreibung

Die Erfindung betrifft ein Verfahren zur Herstellung von Formteilen aus Partikelschaum aus zumindest oberflächig miteinander verschmolzenen und eine geschlossene Oberfläche aufweisenden Polymerschaumpartikeln und wenigstens einer Deckschicht aus wenigstens einem Polymer in einem Formwerkzeug.

Thermoplastische Polymere und hieraus durch Expansion hergestellte Schäume, z. B. Partikelschäume, finden vielfältige Verwendung. Sie werden insbesondere in der Automobilindustrie verbreitet zur Gewichtseinsparung gegenüber kompakten Werkstoffen oder als Isolationsschicht gegen Schall, Wärme oder Stoß eingesetzt, nehmen jedoch nur in begrenztem Maß Kräfte auf und sind in der Regel auch nicht diffusionsdicht und nicht abriebfest. In den meisten Anwendungsfällen muß der Partikelschaum daher einseitig beschichtet oder vollständig umhüllt werden, wobei der Schicht- bzw. Hüllwerkstoff beispielsweise eine glatte oder dekorative Oberfläche liefert und dem Formteil die notwendige Festigkeit und gewünschten Oberflächeneigenschaften verleiht.

Bei solchen Werkstoffverbunden wird entweder der Partikelschaum nach seiner Herstellung und Formbildung mit der Deckschicht, z. B. einer Folie oder dergleichen, verbunden, oder die Deckschicht wird in einem Formwerkzeug angeordnet und mit den Partikeln hinterschäumt, wobei insbesondere im Falle einer folienartigen Deckschicht diese die geschäumten Partikel hüllenartig umgeben kann, sofern das Formteil eine geschlossene Oberfläche aufweisen soll. Das erstgenannte. Verfahren ist aufwendig und aufgrund des Einsatzes von Klebern, Lösungsmitteln oder dergleichen wenig umweltverträglich. Bei dem zweiten Verfahren kann es bei dünnen Dekorschichten zu sichtbaren Abdrücken der geschäumten Partikel und damit zu Unebenheiten auf der Oberfläche der Dekorschicht kommen, indem diese sich während des Hinterschäumens an die Oberfläche der angrenzenden Partikel anlegt. Ferner sind Formteile, die Formkonturen mit kleinen Krümmungsradien aufweisen, auf diese Weise gar nicht herstellbar, da die Dekorschicht zum einen Falten schlägt, zum anderen nicht vollflächig mit den geschäumten Partikeln verbunden wird.

Es ist bekannt, Formteilen aus Partikelschaum dadurch eine dekorative Oberfläche zu verleihen, indem sie nach ihrer Herstellung lackiert werden oder eine weitere Schicht aus einem Polymer durch Flammspritzen aufgebracht wird. Solche notwendigerweise dünnen Dekorschichten haben nur einen beschränkten Glättungseffekt und lassen die in der Regel rauhe Partikeloberfläche erkennen. Bei Beanspruchungen kommt es aufgrund der Nachgiebigkeit des Partikelschaums zu Delaminierungen oder Abplatzungen. Auch die Abriebfestigkeit läßt zu wünschen übrig.

Des weiteren ist das sogenannte In Mould Dekorieren (IMD) zur Herstellung massiver Formteile bekannt. Hierbei wird entweder eine Dekorfolie in das Formwerkzeug eingelegt und hinterspritzt, oder der Formraum des Formwerkzeugs wird vor dem Spritzgießen mit einem Lackträgerfilm beschichtet (In Mould Surfacing). Ferner sind zur Herstellung von dreidimensional geformten Folien Rotationssinterverfahren bekannt, wobei pulverförmige thermoplastische Polymere in ein rotierendes Formwerkzeug eingebracht und an der heißen Werkzeugwand zur Folie verschmolzen werden.

Dieses Verfahren wird in abgewandelter Form auch zur Herstellung von Formteilen aus Partikelschaum mit einer polymeren Deckschicht, insbesondere für Kraftfahrzeug- und Flugzeuginnenverkleidungsteile angewandt. Die Deckschicht wird mittels der vorgenannten Slush-Moulding- oder Rotationssinterverfahren auf die Oberfläche des Formraums aufgebracht und dadurch vorgeformt und anschließend die Form mit den Polymerschaumpartikeln befüllt. Letztere werden durch Heißdampf thermisch sowohl mit der Deckschicht als auch untereinander verbunden. Das fertige Formteil wird abgekühlt und dem Formwerkzeug entnommen.

Der CH 492 544 ist ein Verfahren entnehmbar, bei dem der Formraum mit einem kompakten thermoplastischen Polymer in flüssiger oder partikulärer Phase beschichtet und anschließend die Polymerschaumpartikel eingebracht werden. Ähnliche Verfahren sind der FR 2 012 504 und der JP 05-008 315 A zu entnehmen.

Bei den bekannten Verfahren ist aufgrund des vollflächigen Kontaktes des Polymers der Deckschicht mit dem Formwerkzeug während des Hinterschäumens zwar sichergestellt, daß sich die Deckschicht nicht der Kontur der angrenzenden geschäumten Partikel anpaßt und eine ungleichmäßige oder unebene Oberfläche bildet, so daß Abdrücke der Schaumpartikel auch bei dünnen Deckschichten weitgehend vermieden werden. Auch ist die Herstellung von Formteilen aus Partikelschaum mit verwickelter, z. B. stark konturierter Oberfläche möglich, da das die Deckschicht bildende flüssige oder pulver- bzw. partikelförmige Polymer auf beliebig ausgestaltete Formkonturen, auch solche mit kleinen Radien, aufgebracht werden kann. Allerdings ist das Einbringen des die Deckschicht bildenden Polymers in flüssiger oder feinpartikulärer Phase in das Formwerkzeug vor Befüllen desselben mit den Polymerschaumpartikeln aufwendig und teuer. So muß bei Einbringen eines flüssigen Polymers die Formkontur besprüht oder lackiert werden, was in vorrichtungstechnischer Hinsicht einen erheblichen Mehraufwand bedeutet und insbesondere bei stark konturierten Formkonturen handhabungstechnische Probleme mit sich bringt. Bei Einbringen eines feinpartikulären Polymers muß das Formwerkzeug zusätzlich rotiert werden, um eine möglichst homogene Deckschicht zu erzeugen. Zudem kann während des anschließenden thermischen Verbindens der Polymerschaumpartikel mit Heißdampf grundsätzlich keine geschlossene Deckschicht erzeugt werden, da die Injektionsstellen des Formwerkzeugs für den Heißdampf ausgespart bleiben müssen oder die Deckschicht andernfalls im Bereich dieser Injektionsstellen Oberflächenmarken aufweist, welche die Deckschicht ästhetisch beeinträchtigen. Schließlich wird nur eine mangelhafte Trocknung des Partikelschaums nach dem thermischen verbinden der Polymerschaumpartikel erreicht, da die Deckschicht weitestgehend diffusionsdicht ist und die Verdampfung des eingeschlossenen Dampfes bzw. des Kondensates verhindert.

Die DE 34 39 101 A1 beschreibt die Herstellung eines Formteils mit einer Schaumstoff- und einer Trägerschicht, die zugleich als Deckschicht des Formteils dient. Hierzu wird ein vorgefertigtes Vorformteil aus einem offenporigen Schaumstoff in ein Formwerkzeug eingebracht und ein die Deckschicht bildendes Polymer in flüssiger Phase unter Druck in einen Zwischenraum zwischen dem Vorformteil und der Deckschicht eingebracht. Für die Deckschicht ist der Einsatz einer Flüssigharzmischung eines duroplastischen Polymers in Form eines Polyurethans vorgesehen. Die Verbindung zwischen dem Schaumstoff-Vorformteil und der Deckschicht erfolgt durch Formschluß unter Eingriff der Deckschicht in die offenporige Schaumstruktur des Vorformteils, wobei die Flüssigharzmischung unter Druck in das Formwerkzeug eingebracht wird, so daß das vorgefertigte vorformteil komprimiert wird und das Material der Deckschicht einen größer werdenden Formraum einnimmt.

Nachteilig ist einerseits, daß das Vorformteil zunächst vorgefertigt und in das zum Aufbringen der Deckschicht vorgesehene Formwerkzeug überführt werden muß. Andererseits ist das bekannte Verfahren zum Aufbringen einer Deckschicht auf einen Partikelschaum aus thermoplastischen oder thermoelastischen Polymeren aufgrund deren schlechter Verträglichkeit mit duroplastischen Polymeren sowie der grundsätzlich schlechten Adhäsionseigenschaft von Partikelschäumen ungeeignet. Dies gilt insbesondere für Partikelschäume aus Polymerschaumpartikeln mit geschlossener Oberfläche, da der Deckschicht dort ein formschlüssiger Eingriff in den Partikelschaum verwehrt ist und es zu unzeitigen Delaminierungen kommen kann.

Aus der US-A-4 582 658 ist ein Verfahren zur Herstellung von geschäumten Formteilen bekannt, bei dem eine Vorformling im Formraum eines Formwerkzeugs ausgeschäumt wird und danach eine Deckschicht durch Aushärten eines in den Formraum eingebrachten flüssigen Polymers auf der Oberfläche des Vorformlings unter Bildung eines stoffschlüssigen Verbundes aufgebracht wird.

Der Erfindung liegt die Aufgabe zugrunde, ein einfaches und kostengünstiges Verfahren vorzuschlagen, welches die Herstellung von Formteilen aus Partikelschaum aus zumindest oberflächig miteinander verschmolzenen und eine geschlossene Oberfläche aufweisenden Polymerschaumpartikeln und wenigstens einer sichtseitig angeordneten Schicht nahezu beliebiger Dicke unter Vermeidung sichtbarer Partikelabdrücke ermöglicht und insbesondere auch zur Herstellung von Formteilen mit stark konturierter Oberfläche geeignet ist.

Erfindungsgemäß wird diese Aufgabe mit einem Verfahren gemäß dem Anspruch 1 gelöst.

Mittels des erfindungsgemäßen Verfahrens wird ein vollflächiger Kontakt der Deckschicht mit dem Formwerkzeug während der Verarbeitung garantiert und werden hierdurch sichtbare Abdrücke der geschäumten Partikel auch bei dünnen Dekorschichten zuverlässig vermieden. Weiterhin wird sichergestellt, daß sich die Deckschicht nicht der Kontur der angrenzenden Schaumpartikel anpaßt und eine ungleichmäßige oder unebene Oberfläche bildet. Formteile mit komplizierter, filigraner Oberfläche sind somit einfach und kostengünstig mittels eines einzigen Formwerkzeugs herstellbar. Der Stoffschluß zwischen dem Partikelschaum und der Deckschicht sorgt für einen dauerhaften Verbund und verhindert jegliche Delaminierungen, indem der Partikelschaum insbesondere zumindest oberflächig in das noch weiche, die Deckschicht bildende Polymer eindringt und eine innige Schmelzverbindung sowohl zwischen den geschäumten Partikeln untereinander als auch zwischen diesen und dem die Deckschicht bildenden Polymer zustande kommt, wobei die Polymerschaumpartikel durch Wärmeleitung oberflächig angeschmolzen werden können. Die Deckschicht kann grundsätzlich als Dekorschicht dienen und/oder dem Partikelschaum die gewünschte Stabilität verleihen.

Das die Deckschicht bildende flüssige Polymer wird zweckmäßig unter Druck in den Formraum eingebracht, wobei es unter Kompression des Partikelschaums diesen vollständig oder auch nur teilweise bedecken kann.

Eine Ausführungsform des erfindungsgemäßen Verfahrens sieht vor, daß das Formwerkzeug vor Einbringen des die Deckschicht bildenden Polymers unter Bildung eines Zwischenraums zwischen zumindest einer Oberfläche des Vorformteils und zumindest einer Oberfläche des Formraums des Formwerkzeugs geöffnet wird, wobei das in den Zwischenraum eingebrachte flüssige Polymer für die Deckschicht unter erneutem, zumindest teilweisen Schließen des Formwerkzeugs ausgehärtet werden kann. Auf diese Weise können unterschiedliche Dicken der Deckschicht erzeugt oder die Deckschicht auch nur in die beim Öffnen des Formwerkzeugs entstehenden Zwischenräume eingebracht werden. Durch zumindest teilweises Schließen des Formwerkzeugs nach Einbringen des die Deckschicht bildenden flüssigen Polymers kann die hierbei entstehende Kompressionswärme zur Bildung einer zumindest einseitigen - im Falle einer thermoplastischen und/oder thermoelastischen Deckschicht insbesondere auch zweiseitigen - einwandfreien Schmelzverbindung zwischen Partikelschaum und Deckschicht genutzt werden.

Alternativ oder zusätzlich kann vorgesehen sein, daß vor dem Befüllen des Formwerkzeugs mit den Partikeln ein zumindest teilweise in den Formraum hineinragender Schieber angeordnet und der Schieber nach dem thermischen Verbinden. der Partikel zu dem Vorformteil und vor Einbringen des die Deckschicht bildenden Polymers unter Bildung eines Zwischenraums zwischen zumindest einer Oberfläche des Vorformteils und zumindest einer Oberfläche des Formraums des Formwerkzeugs aus dem Formraum ausgezogen wird. Auch in diesem Fall sorgt der mit dem Schieber erzeugte Freiraum für eine Deckschicht erhöhter Dicke.

Wie bereits angedeutet, kann die Deckschicht im wesentlichen auf die gesamte Oberfläche des Vorformteils oder auch nur auf einen Teil der Oberfläche desselben aufgebracht werden, wobei die mit der Deckschicht beschichtete Oberfläche des Vorformteils insbesondere durch den Druck des zwischen das Vorformteil und die Oberfläche des Formraums eingebrachten flüssigen Polymers und/oder durch lokale Anordnung und Anzahl der Einspritzkanäle des Formwerkzeugs eingestellt wird. So kann im Falle eines niedrigen Einspritzdrucks bzw. z. B. nur auf einer Fläche des Formraums angeordneten Einspritzkanälen nur die entsprechende Oberfläche des Partikelschaums mit einer Deckschicht versehen werden, während bei erhöhtem Druck und/oder mehreren, um den Formraum verteilt angeordneten Einspritzkanälen mehrere oder insbesondere auch die gesamte Oberfläche des Partikelschaums unter Kompression desselben beschichtet werden kann. Ferner besteht, wie gesagt, die Möglichkeit, durch teilweise Öffnen des Formwerkzeugs und/oder Einbringen eines oder mehrerer Schieber, lokal dickere Deckschichten oder auch ausschließlich in den beim Öffnen des Formwerkzeugs bzw. Ausziehen des Schiebers freiwerdenden Zwischenräumen angeordnete Deckschichten vorzusehen.

Eine bevorzugte Ausführungsform sieht vor, daß für die Deckschicht wenigstens ein schmelzflüssiges thermoplastisches und/oder thermoelastisches Polymer in den Formraum eingebracht und ausgehärtet wird, wobei aus Gründen der Sorteneinheit sowie einer einwandfreien Verträglichkeit der Polymere untereinander für die Deckschicht mit Vorzug gleiche Polymere wie für den Partikelschaum oder solche enthaltende Polymermischungen eingesetzt werden. Hierbei wird das Vorformteil aus Partikelschaum zur Sicherstellung einer stoffschlüssigen Verbindung vorteilhafterweise zumindest oberflächig angeschmolzen, was beispielsweise durch Wärmeleitung aus dem schmelzflüssigen thermoplastischen oder thermoelastischen Polymer der Deckschicht geschehen kann.

Je nach Anwendungszweck des Formteils können für die Deckschicht treibmittelfreie oder mit thermisch aktivierbaren physikalischen und/oder chemischen Treibmitteln versetzte thermoplastische oder thermoelastische Polymere eingesetzt werden und das Treibmittel im letztgenannten Fall während oder unmittelbar nach Einbringen in den Formraum aktiviert werden, so daß eine geschäumte Deckschicht erzeugt wird.

Gemäß einer anderen bevorzugten Ausführungsform ist vorgesehen, daß für die Deckschicht flüssige Mono-, Di- und/oder Oligomere wenigstens eines thermoplastischen und/oder thermoelastischen Polymers in den Formraum eingebracht und - zweckmäßigerweise in Gegenwart eines geeigneten Polymerisationskatalysators - durch Polymerisation ausgehärtet werden. Die hierbei freiwerdende Polymerisationswärme kann zur Sicherstellung einer stoffschlüssigen Verbindung in Form einer Schmelzverbindung zwischen Partikelschaum und Deckschicht genutzt werden, indem der Partikelschaum oberflächig angeschmolzen wird.

Um eine schnelle Aushärtung der Deckschicht unter weitestgehender Vermeidung eines Schwundes zu sorgen, können in die flüssigen Mono-, Di- und/oder Oligomere pulverförmige Polymere eindispergiert werden. Auch im Falle einer auf dem Partikelschaum polymerisierenden Deckschicht ist es selbstverständlich möglich, daß den flüssigen Mono-, Diund/oder Oligomeren und/oder den in diese eindispergierten pulverförmigen Polymeren thermisch aktivierbare physikalische und/oder chemische Treibmittel zugesetzt werden und das Treibmittel während der Polymerisation aktiviert wird, so daß eine geschäumte Deckschicht erzeugt wird.

Ebenfalls ist es denkbar, daß für die Deckschicht ein Flüssigharz oder eine Flüssigharzmischung eines duroplastischen oder elastischen Polymers zwischen das Vorformteil und die Oberfläche des Formraums eingebracht und ausgehärtet wird, wobei je nach Einsatzzweck des Formteils beim Aushärten im wesentlichen vollständig zu einem kompakten duroplastischen oder elastischen Polymer polymerisierende bzw. vernetzende Flüssigharze oder beim Aushärten unter Abspaltung von Flüssigkeiten oder Gasen zu einem geschäumten duroplastischen oder elastischen Polymer polymerisierende bzw. vernetzende Flüssigharze eingesetzt werden können. Das Vorformteil kann z. B. vor Einbringen des Flüssigharzes oder der Flüssigharzmischung in den Zwischenraum oberflächig mit einem Haftvermittler versehen werden. Ebenfalls ist es beispielsweise möglich, exotherm aushärtende Harze zu verwenden und den Partikelschaum des Vorformteils zumindest oberflächig durch Wärmeleitung anzuschmelzen, so daß eine innige Schmelzverbindung zwischen dem Vorformteil und der Deckschicht zustande kommt.

Zur Herstellung von Formteilen mit mehreren oberflächig auf den Partikelschaum aufgebrachten Schichten ist vorgesehen, daß zunächst ein eine Zwischenschicht bildendes Polymer in flüssiger Phase zwischen das Vorformteil und die Oberfläche des Formraums eingebracht und auf der Oberfläche des Vorformteils ausgehärtet und anschließend das Formwerkzeug unter Bildung eines Zwischenraums zwischen der freien Oberfläche der Zwischenschicht und der Oberfläche des Formraums geöffnet und auf die Zwischenschicht das die Deckschicht bildende Polymer in flüssiger Phase aufgebracht und ausgehärtet wird. Mit Vorzug werden für die Zwischenschicht(en) und die Deckschicht gleiche Polymere oder gleiche Polymere enthaltende Polymermischungen eingesetzt, um eine einwandfreie Verbindung der Schichten sicherzustellen, wobei beim Einsatz von thermoplastischen und/oder thermoelastischen Polymeren das die Zwischenschicht bildende Polymer beim Einbringen des die Deckschicht bildenden Polymers in den Zwischenraum vorzugsweise angeschmolzen wird, so daß eine beidseitige Schmelzverbindung zustande kommt.

Zur Herstellung von Formteilen mit einer diffusionsdichten, kratz- und abriebfesten Oberfläche mit weicher Haptik ("Soft-Touch") ist vorgesehen, daß für die Deckschicht treibmittelfreie Polymere und für die Zwischenschicht mit wenigstens einem Treibmittel versetzte Polymere eingesetzt werden. Mit "Treibmittel" sind in diesem Zusammenhang sowohl physikalische und/oder chemische Treibmittel zum Einsatz in thermoplastischen oder thermoelastischen Polymeren als auch beim Aushärten von duroplastischen oder elastischen Polymeren unter Abspaltung von Flüssigkeiten oder Gasen reagierende Komponenten gemeint.

Falls das Formteil eine Zwischenschicht aufweisen soll, können dem diese bildenden Polymer Verstärkungsfasern zugesetzt werden, die bei der Verarbeitung insbesondere oberflächig in den angrenzenden Partikelschaum und/oder die Deckschicht eindringen und auf diese Weise nicht nur für eine erhöhte Festigkeit des Formteils, sondern auch für eine besonders dauerhafte Verbindung der Schichten dienen. Ebenfalls können dem die Sichtseite bildenden Polymer bzw. den geschäumten Partikeln Verstärkungsfasern zugesetzt und/oder solche enthaltende Partikel eingesetzt werden. Werden z. B. Verstärkungsfasern enthaltende Partikel eingesetzt und diesen zusätzliche Verstärkungsfasern zugesetzt, so kommt es beim thermischen Verbinden der Partikel, bei der diese zumindest oberflächig miteinander verschmelzen, durch die sowohl inter- als auch intrapartikulär angeordneten Verstärkungsfasern zu einer besonders festen und innigen Verbindung der geschäumten Partikel untereinander sowie mit der angrenzenden Deckschicht oder gegebenenfalls der Zwischenschicht.

Als Verstärkungsfasern kommen grundsätzlich beliebige herkömmliche synthetische oder mineralische Fasern, wie Glas-, Metall-, Carbon-, Aramidfasern oder dergleichen, oder insbesondere natürliche Verstärkungsfasern, wie Holz-, Cellulose-, Hanf-, Sisal-, Schilfgras-, Kokosfasern oder dergleichen, in Frage. Aus Gründen der biologischen Abbaubarkeit und der damit verbundenen einfachen Rezyklierbarkeit kommen bevorzugt Naturfasern zum Einsatz.

Mit Vorzug werden für die Deckschicht und gegebenenfalls die Zwischenschicht gleiche Polymere wie für den Partikelschaum oder solche enthaltende Polymermischungen eingesetzt, um einerseits ein sortenreines, einfach rezyklierbares Formteil, andererseits eine optimale stoffschlüssige Verbindung zwischen der Deckschicht und dem Partikelschaum zu erhalten. Zur Erzeugung derartiger Monostoffverbunde kann das Material der Partikel z. B. aus der Gruppe, expandiertes bzw. expandierbares Polyethylen (EPE), expandiertes bzw. expandierbares Polypropylen (EPP) und expandiertes bzw. expandierbares Polystyrol (EPS) gewählt werden, während das Material der Deckschicht und gegebenenfalls der Zwischenschicht aus der Gruppe Polyethylen (PE), Polypropylen (PP) und Polystyrol (PS) gewählt wird.

Selbstverständlich können grundsätzlich bereits geschäumte oder auch vorgeschäumte und/oder schäumbare Partikel eingesetzt und während des thermischen Verbindens aufgeschäumt werden.

Vorzugsweise wird auf die Oberfläche des Formraums des Formwerkzeugs in an sich bekannter Weise zunächst ein Formtrennmittel aufgebracht und/oder zumindest das die Sichtseite bildende Polymer mit einem solchen versehen.

Im Falle eines Formteils mit besonders hoher Festigkeit, wie eines lasttragenden Formteils, ist vorgesehen, daß an einer der Deckschicht abgewandten Seite des Formraums eine Trägerschicht, insbesondere aus wenigstens einem Polymer, angeordnet und mit den Partikeln hinter- bzw. umschäumt wird. Eine solche Trägerschicht besteht bevorzugt aus kompakten Polymeren. Sie kann ebenfalls Verstärkungsfasern aufweisen und besteht aus Gründen der Sortenreinheit bevorzugt aus gleichen oder ähnlichen Polymeren wie der Partikelschaum.

Falls anstelle einer glatten Oberfläche eine insbesondere dreidimensionale Strukturen aufweisende, dekorative Oberfläche des Formteils gewünscht ist, wird die Deckschicht des Formteils mittels einer strukturierten Oberfläche des Formraums des Formwerkzeugs zumindest bereichsweise mit einer Oberflächenstruktur versehen, diese mittels eines geeigneten Formwerkzeugs oder Einsatzstücks für das Formwerkzeug beispielsweise aufgeprägt.

Zum thermischen Verbinden der geschäumten Partikel kann entweder Heißdampf oder hochfrequente elektromagnetische Strahlung, insbesondere Mikrowellenstrahlung, eingesetzt werden. Im letztgenannten Fall können zumindest teilweise strahlungsabsorbierende Polymere und/oder mit zumindest teilweise strahlungsabsorbierenden Treibmitteln versetzte Polymere eingesetzt werden, oder die Partikel werden vor Einbringen in das Formwerkzeug mit einem strahlungsabsorbierenden Medium beschichtet oder benetzt. Es können beliebige bekannte flüssige oder feste mikrowellenabsorbierende Medien, z. B. polare Flüssigkeiten, wie Wasser, Alkohole oder dergleichen, Graphit, Ruß, Metallpulver etc. zum Einsatz kommen.

Mittels des erfindungsgemäßen Verfahrens lassen sich mit wenigstens einer Deckschicht versehene dreidimensionale Formteile aus Partikelschaum mit komplizierter Oberflächenstruktur, gegebenenfalls auch in Form von Hohlkörpern, herstellen. Das Verfahren ist daher in besonderem Maß zur Herstellung von Formteilen für Innenverkleidungen, Motorraumteile und Karosserieteile für Kraftfahrzeuge, z. B. Türinnenverkleidungen, Sonnenblenden, Instrumententafeln, Armaturenbrettern, Cockpitmodule, Motorraumauskleidungen, Stoßfänger, Fronthauben, Frontendträger etc., für Möbel, insbesondere Gartenmöbel, für Sportgeräte, wie Surfbretter, Wellengleiter, Bootskörper etc. oder für Gehäuse oder Isolationsbehälter geeignet.

Nachstehend ist die Erfindung anhand von Ausführungsbeispielen unter Bezugnahme auf die Zeichnungen näher erläutert. Es zeigen:
- Fig.1: ein schematisches Verfahrensfließbild einer Ausführungsform eines Verfahrens zur Herstellung von Formteilen aus Partikelschaum mit einer durchgängigen Deckschicht;
- Fig.2: eine Ausführungsvariante des Verfahrens gemäß Fig. 1 zur Herstellung von Formteilen aus Partikelschaum mit einer partiell auf diesen aufgebrachten Deckschicht;
- Fig.3: eine weitere Ausführungsvariante des Verfahrens gemäß Fig. 1 mit teilweisem Öffnen des Formwerkzeugs vor Einbringen des flüssigen Polymers der Deckschicht;
- Fig.4: eine weitere Ausführungsvariante des Verfahrens gemäß Fig. 1 unter Einbringen eines Schiebers in den Formraum des Formwerkzeugs und
- Fig.5: eine Ausführungsvariante des Verfahrens gemäß Fig. 4.

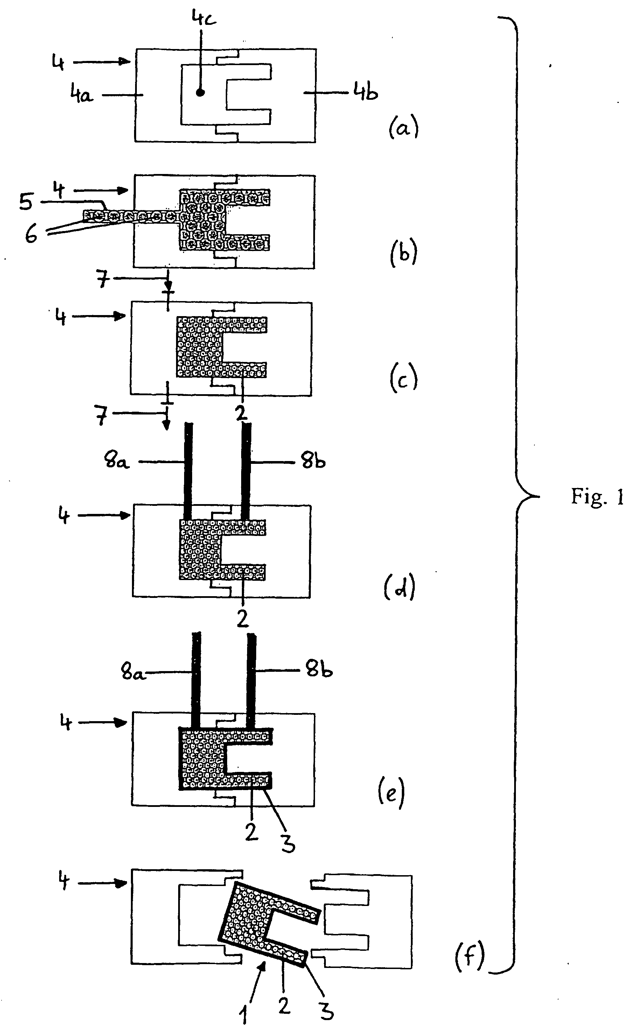

Fig.1 zeigt die Herstellung eines Formteils 1 (Fig. 1f) aus einem thermoplastischen Partikelschaum 2, z. B. aus expandiertem oder expandierbarem Polyethylen (EPE), Polypropylen (EPP), Polystyrol (EPS) oder dergleichen, mit einer auf die gesamte Oberfläche des Partikelschaums 2 aufgebrachten, z. B. dekorativen Deckschicht 3 aus einem thermoplastischen oder thermoelastischen Polymer, wie Polyethylen (PE), Polypropylen (PP), Polystyrol (PS) oder dergleichen.

Hierbei wird der Formraum 4c eines aus einem Oberwerkzeug 4a und einem Unterwerkzeug 4b bestehenden Formwerkzeugs 4 (Fig. 1a) z. B. über eine in den Formraum 4c mündende Zuführung 5 mit geschäumten, vorgeschäumten oder schäumbaren Partikeln 6 des den Polymerschaum 2 bildenden Polymers befüllt (Fig. 1b). Die Partikel 6 weisen eine weitestgehend geschlossene Oberfläche auf. Anschließend werden die Partikel 6, gegebenenfalls unter Aufschäumen derselben, mittels Heißdampf 7 unter Bildung des Partikelschaums 2 zumindest oberflächig miteinander thermisch verbunden (Fig. 1c). Alternativ können die Partikel 6 auch mit hochfrequenter elektromagnetischer Strahlung, insbesondere Mikrowellenstrahlung, thermisch miteinander verbunden werden, wobei die Partikel 6 z. B. mit strahlungsabsorbierenden Medien beschichtet oder benetzt werden oder auch der gesamte Formraum 4c des Formwerkzeugs 4 mit einem flüssigen, strahlungsabsorbierenden Medium geflutet und dieses durch Mikrowellenenergie verdampft wird.

Nach dem thermischen Verbinden der Partikel 6 zu einem Vorformteil aus Partikelschaum 2 wird das die Deckschicht 3 bildende Polymer in flüssiger Phase in den Formraum 4c des Formwerkzeugs 4 unter Druck eingebracht, wobei der Partikelschaum 2 komprimiert wird und das flüssige Polymer den gesamten Zwischenraum 4c zwischen dem Partikelschaum 2 und der Formkontur des Formraums 4c ausfüllt. Dies geschieht gemäß Fig. 1d mittels zweier Injektionskanäle 8a, 8b, wobei selbstverständlich auch mehrere, um den Formraum 4c verteilt angeordnete Injektionskanäle vorgesehen sein können.

Während das Polymer der Deckschicht 3 einerseits in schmelzflüssiger Phase in das Formwerkzeug 4 eingebracht werden kann, kann andererseits auch vorgesehen sein, daß flüssige Mono-, Di-, und/oder Oligomere mit gegebenenfalls in diese eindispergierten pulverförmigen Polymere in Anwesenheit eines Polymerisationskatalysators in das Formwerkzeug 4 eingebracht und auf der Oberfläche des Partikelschaums 2 ausgehärtet werden. In beiden Fällen wird ein dauerhafter stoffschlüssiger Verbund erhalten, indem der Partikelschaum 2 entweder durch Wärmeleitung aus dem schmelzflüssigen Polymer oder durch die Polymerisationswärme der polymerisierenden Mono-, Di- oder Oligomeren oberflächig angeschmolzen und mit der Deckschicht 3 verbunden wird (Fig. 1e). Im Falle des thermischen Verbindens der Polymerschaumpartikel 6 mit Heißdampf werden vor Einbringen des flüssigen Polymers der Deckschicht 3 zweckmäßig die Injektionsdüsen des Formwerkzeugs 4 für den Heißdampf (nicht dargestellt) verschlossen.

Anschließend wird das Formwerkzeug 4 z. B. durch es durchsetzende Kühlmittelkanäle (nicht dargestellt) gekühlt, gemäß Fig. 1f geöffnet und das fertige Formteil 1 entnommen. Die Partikel 6 des Partikelschaums 2 des Formteils 1 dringen oberflächig in das die Deckschicht 3 bildende Polymer ein und gehen mit diesem eine homogene, innige und dauerhafte Schmelzverbindung ein, ohne daß auch bei dünnen Deckschichten 3 sichtbare Partikelabdrücke entstehen. Die Deckschicht 3 verleiht dem Formteil 1 eine gleichmäßige, ebene Oberfläche, ohne sich an der Sichtseite den Zwischenräumen der angrenzenden Partikel 6 anzupassen. Alternativ kann die Deckschicht 3 eine dreidimensionale Oberflächenstruktur aufweisen, welche durch eine komplementäre Oberflächenstruktur des Formraums 4c des Formwerkzeugs 4 erzeugt wird.

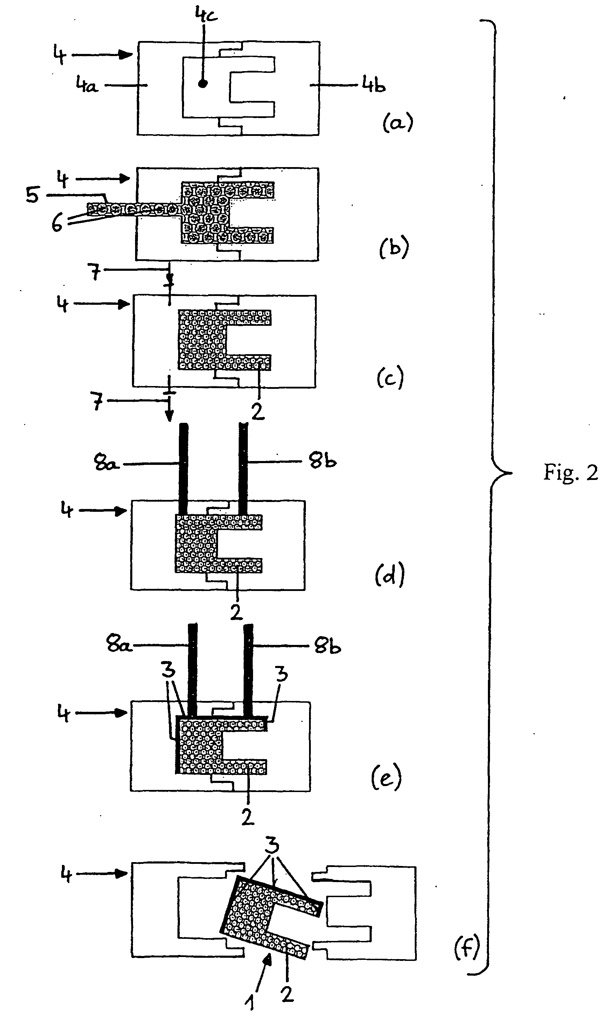

Die in Fig. 2 gezeigte Ausführungsform unterscheidet sich von der Ausführungsform gemäß Fig. 1 lediglich dadurch, daß die Deckschicht 3 auf nur einen Teil der Oberfläche des Partikelschaums 2 des Vorformteils aufgebracht wird (Fig. 2e). Dies wird insbesondere durch entsprechende Anordnung der Injektionskanäle 8a, 8b und/oder durch Einstellen eines gegenüber der Erzeugung einer geschlossenen Deckschicht verminderten Drucks des flüssigen Polymers erreicht. Im Falle des thermischen Verbindens der Polymerschaumpartikel 6 mit Heißdampf wird hierbei vorzugsweise ein Formwerkzeug 4 eingesetzt, bei dem die Injektionsdüsen für den Heißdampf (nicht dargestellt) auf einer oder mehreren den Injektionskanälen 8a, 8b abgewandten Seiten des Formraums 4c angeordnet sind.

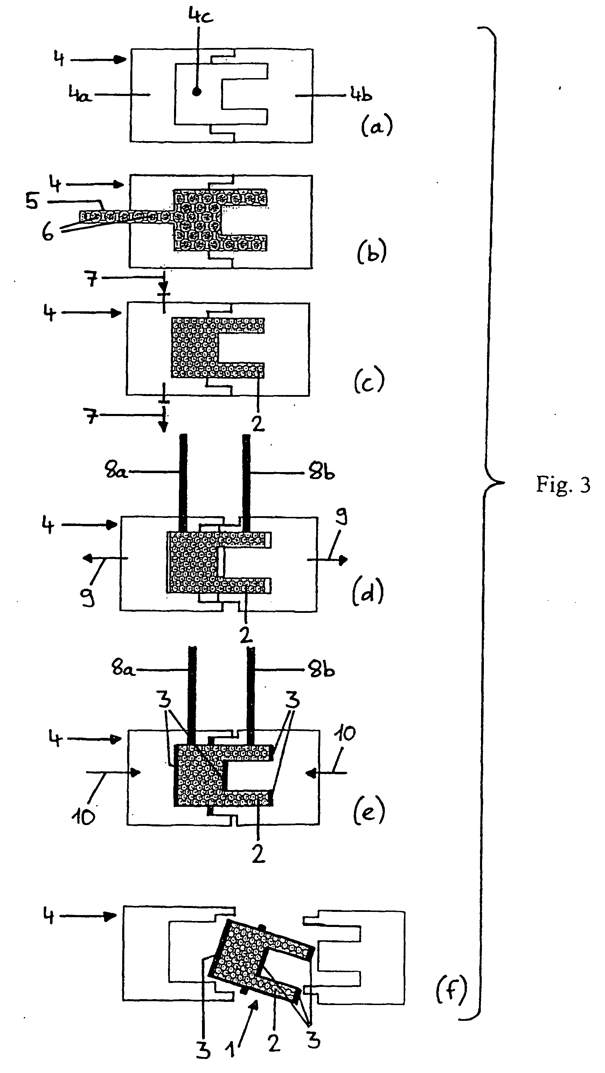

Bei dem Verfahren gemäß Fig. 3 wird das Formwerkzeug 4 vor Einbringen des die Deckschicht 3 bildenden flüssigen Polymers unter Bildung eines Zwischenraums zwischen dem Partikelschaum 2 des Vorformteils und der Oberfläche des Formraums 4c des Formwerkzeugs 4 geöffnet (Pfeil 9 der Fig. 3d). Nach Einbringen des flüssigen Polymers der Deckschicht 3 über die Injektionskanäle 8a, 8b unter Druck wird letztes unter erneuten, teilweisen Schließen des Formwerkzeugs 4 ausgehärtet (Pfeil 10 der Fig. 3e). Hierbei wird die beim Schließen des Formwerkzeugs 4 freiwerdende Kompressionswärme zur Bildung einer einwandfreien stoffschlüssigen Schmelzverbindung zwischen Partikelschaum 2 und Deckschicht 3 genutzt.

Wie aus Fig. 3f ersichtlich, weist das derart hergestellte Formteil 1 eine geschlossene Deckschicht 3 auf, die an den durch Öffnen des Formwerkzeugs 4 (Fig. 3d) gebildeten Zwischenräumen eine erhöhte Dicke aufweist. Selbstverständlich ist es durch entsprechende Anordnung der Injektionskanäle 8 und vermindern des Drucks des flüssigen Polymers beim Einbringen in den Formraum 4c auch möglich, den Partikelschaum 2 des Vorformteils ausschließlich an seinen an den beim Öffnen des Formwerkzeugs (Pfeil 9 der Fig. 3d) gebildeten Zwischenraum angrenzenden Oberflächen mit einer Deckschicht 3 zu versehen.

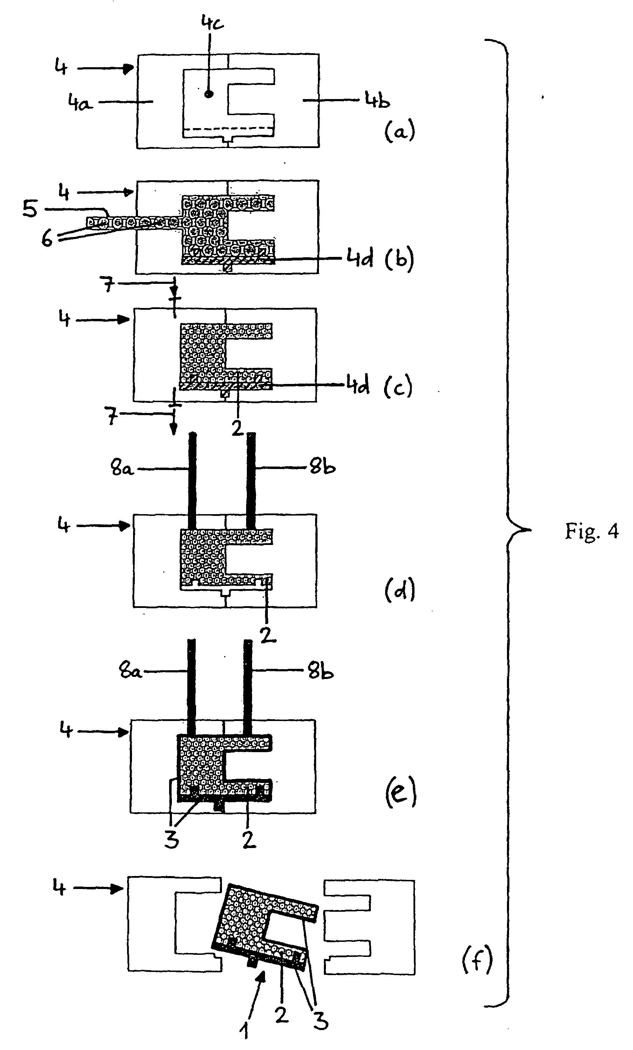

Das bei der in Fig. 4 dargestellten Ausführungsform des erfindungsgemäßen Verfahren eingesetzte Formwerkzeug 4 ist mit einem entlang einem randseitigen Abschnitt des Formraums 4c geführten Schieber 4d ausgestattet. Wie der Fig. 4b zu entnehmen ist, wird der Schieber 4d vor dem Befüllen des Formwerkzeugs 4 mit den Partikeln 6 in den Formraum eingeschoben und die Partikel 6 in Anwesenheit des Schiebers 4d zu dem Vorformteil aus Partikelschaum 2 mittels Heißdampf 7 thermisch verbunden (Fig. 4c). Sodann wird der Schieber 4d aus dem Formraum 4c des Formwerkzeugs 4 ausgezogen, das flüssige Polymer der Deckschicht 3 über die Injektionskanäle 8a, 8b unter Druck in den Formraum 4c eingebracht und auf der Oberfläche des Partikelschaums 2 unter Bildung eines stoffschlüssigen Verbundes ausgehärtet.

Wie aus Fig. 4f ersichtlich, weist das solchermaßen erzeugte Formteil 1 eine geschlossene Deckschicht 3 auf, die an ihrer dem durch den Schieber 4d freigehaltenen Abschnitt des Formraums 4c zugewandten Seite eine erhöhte Dicke aufweist.

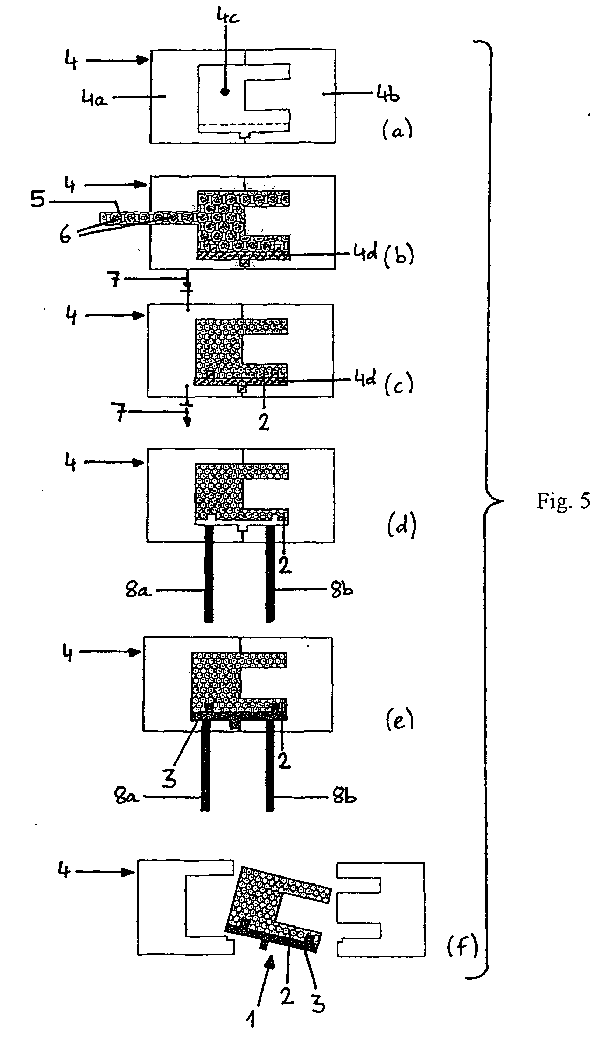

Bei der in Fig. 5 gezeigten Ausführungsform wird das flüssige Polymer der Deckschicht 3 durch entsprechend angeordnete, in den beim Ausziehen des Schiebers 4d aus dem Formraum 4c zwischen Partikelschaum 2 und Formkontur gebildeten Zwischenraum mündende Infektionskanäle 8a, 8b nur auf die zugehörige Oberfläche des Partikelschaums 2 aufgebracht, wobei der Druck des flüssigen Polymers beim Einbringen in den Zwischenraum (Fig. 5e) gering gehalten wird.

In jedem Fall besteht die Möglichkeit der Erzeugung einer kompakten oder - falls das flüssige Polymer der Deckschicht mit Treibmitteln versetzt wird und diese z. B. thermisch aktiviert werden - einer geschäumten Deckschicht. Ferner können weitere mit dem Partikelschaum stoffschlüssig verbundene Schichten, wie Zwischen- oder Trägerschichten, erzeugt werden, wobei insbesondere Monostoffverbunde mit komplizierten Oberflächenstrukturen erhalten werden können.

## Patentansprüche

1. Verfahren zur Herstellung von Formteilen (1) aus Partikelschaum (2) aus zumindest oberflächig miteinander verschmolzenen und eine geschlossene Oberfläche aufweisenden Polymerschaumpartikeln und wenigstens einer Deckschicht (3) aus wenigstens einem Polymer in einem Formwerkzeug (4), mit folgenden Schritten:
a) Befüllen des Formraums (4c) des Formwerkzeugs (4) mit Partikeln (6) aus wenigstens einem geschäumten, vorgeschäumten und/oder schäumbaren thermoplastischen und/oder thermoelastischen Polymer;
b) thermisches Verbinden der Partikel (6) zu einem Vorformteil;
c) Einbringen des die Deckschicht (3) des Formteils (1) bildenden Polymers in flüssiger Phase zwischen das Vorformteil und zumindest eine Oberfläche des Formraums (4c) des Formwerkzeugs (4);
d) Aushärten des in den Formraum (4c) eingebrachten flüssigen Polymers auf der Oberfläche des Vorformteils unter Bildung eines stoffschlüssigen Verbundes;
e) Abkühlen des derart erzeugten Formteils (1) und Entnehmen desselben aus dem Formwerkzeug (4).

2. Verfahren nach Anspruch 1, **dadurch gekennzeichnet, daß** das die Deckschicht (3) bildende Polymer unter Druck in den Formraum (4c) eingebracht wird.

3. Verfahren nach Anspruch 1 oder 2, **dadurch gekennzeichnet, daß** das Formwerkzeug (4) vor Einbringen des die Deckschicht (3) bildenden Polymers unter Bildung eines Zwischenraums zwischen zumindest einer Oberfläche des Vorformteils und zumindest einer Oberfläche des Formraums (4c) des Formwerkzeugs (4) geöffnet wird.

4. Verfahren nach Anspruch 3, **dadurch gekennzeichnet, daß** das in den Zwischenraum eingebrachte flüssige Polymer für die Deckschicht (3) unter erneutem, zumindest teilweisen Schließen des Formwerkzeugs (4) ausgehärtet wird.

5. Verfahren nach einem der Ansprüche 1 bis 4, **dadurch gekennzeichnet, daß** vor dem Befüllen des Formwerkzeugs (4) mit den Partikeln (6) ein zumindest teilweise in den Formraum (4c) hineinragender Schieber (4d) angeordnet und der Schieber (4d) nach dem thermischen Verbinden der Partikel (7) zu dem Vorformteil und vor Einbringen des die Deckschicht (3) bildenden Polymers unter Bildung eines Zwischenraums zwischen zumindest einer Oberfläche des Vorformteils und zumindest einer Oberfläche des Formraums (4c) des Formwerkzeugs (4) aus dem Formraum (4c) ausgezogen wird.

6. Verfahren nach einem der Ansprüche 1 bis 5, **dadurch gekennzeichnet, daß** die Deckschicht (3) im wesentlichen auf die gesamte Oberfläche des Vorformteils aufgebracht wird.

7. Verfahren nach einem der Ansprüche 1 bis 5, **dadurch gekennzeichnet, daß** die Deckschicht (3) nur auf einen Teil der Oberfläche des Vorformteils aufgebracht wird.

8. Verfahren nach einem der Ansprüche 1 bis 7, **dadurch gekennzeichnet, daß** die mit der Deckschicht (3) beschichtete Oberfläche des Vorformteils durch den Druck des zwischen das Vorformteil und die Oberfläche des Formraums (4c) eingebrachten flüssigen Polymers und/oder durch lokale Anordnung und Anzahl der Einspritzkanäle (8a, 8b) des Formwerkzeugs (4) eingestellt wird.

9. Verfahren nach einem der Ansprüche 1 bis 8, **dadurch gekennzeichnet, daß** für die Deckschicht (3) wenigstens ein schmelzflüssiges thermoplastisches und/oder thermoelastisches Polymer in den Formraum (4c) eingebracht und ausgehärtet wird.

10. Verfahren nach Anspruch 9, **dadurch gekennzeichnet, daß** für die Deckschicht (3) mit thermisch aktivierbaren physikalischen und/oder chemischen Treibmitteln versetzte thermoplastische oder thermoelastische Polymere eingesetzt werden und das Treibmittel während oder unmittelbar nach Einbringen in den Formraum (4c) aktiviert wird.

11. Verfahren nach einem der Ansprüche 1 bis 8, **dadurch gekennzeichnet, daß** für die Deckschicht flüssige Mono-, Di- und/oder Oligomere wenigstens eines thermoplastischen und/oder thermoelastischen Polymers in den Formraum (4c) eingebracht und durch Polymerisation ausgehärtet werden.

12. Verfahren nach Anspruch 11, **dadurch gekennzeichnet, daß** in die flüssigen Mono-, Di- und/oder Oligomere pulverförmige Polymere eindispergiert werden.

13. Verfahren nach Anspruch 11 oder 12, **dadurch gekennzeichnet, daß** den flüssigen Mono-, Di- und/oder Oligomeren und/oder den in diese eindispergierten pulverförmigen Polymeren thermisch aktivierbare physikalische und/oder chemische Treibmittel zugesetzt werden und das Treibmittel während der Polymerisation aktiviert wird.

14. Verfahren nach einem der Ansprüche 1 bis 13, **dadurch gekennzeichnet, daß** zunächst ein eine Zwischenschicht bildendes Polymer in flüssiger Phase zwischen das Vorformteil und die Oberfläche des Formraums eingebracht und auf der Oberfläche des Vorformteils ausgehärtet und anschließend das Formwerkzeug (4) unter Bildung eines Zwischenraums zwischen der freien Oberfläche der Zwischenschicht und der Oberfläche des Formraums geöffnet und auf die Zwischenschicht das die Deckschicht (3) bildende Polymer in flüssiger Phase aufgebracht und ausgehärtet wird.

15. Verfahren nach Anspruch 14, **dadurch gekennzeichnet, daß** für die Deckschicht (3) treibmittelfreie Polymere und für die darunter liegende Zwischenschicht mit wenigstens einem Treibmittel versetzte Polymere eingesetzt werden.

16. Verfahren nach Anspruch 14 oder 15, **dadurch gekennzeichnet, daß** dem die Zwischenschicht bildenden Polymer Verstärkungsfasern zugesetzt werden.

17. Verfahren nach einem der Ansprüche 1 bis 16, **dadurch gekennzeichnet, daß** dem die Deckschicht (3) bildenden Polymer Verstärkungsfasern zugesetzt werden.

18. Verfahren nach einem der Ansprüche 1 bis 17, **dadurch gekennzeichnet, daß** den Partikeln (6) Verstärkungsfasern zugesetzt und/oder solche enthaltende Partikel eingesetzt werden.

19. Verfahren nach einem der Ansprüche 1 bis 18, **dadurch gekennzeichnet, daß** für die Deckschicht (3) und gegebenenfalls die Zwischenschicht gleiche Polymere wie für den Partikelschaum (2) oder solche enthaltende Polymermischungen eingesetzt werden.

20. Verfahren nach einem der Ansprüche 1 bis 19, **dadurch gekennzeichnet, daß** das Material des Partikelschaums (2) aus der Gruppe EPE, EPP und EPS und das Material der Deckschicht (3) und gegebenenfalls der Zwischenschicht aus der Gruppe EP, PP und PS gewählt wird.

21. Verfahren nach einem der Ansprüche 1 bis 20, **dadurch gekennzeichnet, daß** die Partikel (6) aus einem vorgeschäumten und/oder schäumbaren Polymer während des thermischen Verbindens aufgeschäumt werden.

22. Verfahren nach einem der Ansprüche 1 bis 21, **dadurch gekennzeichnet, daß** auf die Oberfläche des Formraums (4c) des Formwerkzeugs (4) zunächst ein Formtrennmittel aufgebracht und/oder das die Deckschicht (3) bildende Polymer mit einem solchen versehen wird.

23. Verfahren nach einem der Ansprüche 1 bis 22, **dadurch gekennzeichnet, daß** die Deckschicht (3) des Formteils (1) mittels einer strukturierten Oberfläche des Formraums (4c) des Formwerkzeugs (4) zumindest bereichsweise mit einer Oberflächenstruktur versehen wird.

24. Verfahren nach einem der Ansprüche 1 bis 23, **dadurch gekennzeichnet, daß** zum thermischen Verbinden der geschäumten Partikel (6) Heißdampf eingesetzt wird.

25. Verfahren nach einem der Ansprüche 1 bis 23, **dadurch gekennzeichnet, daß** zum thermischen Verbinden der geschäumten Partikel (6) hochfrequente elektromagnetische Strahlung, insbesondere Mikrowellenstrahlung, eingesetzt wird.

26. Verfahren nach Anspruch 25, **dadurch gekennzeichnet, daß** strahlungsabsorbierende Polymere und/oder mit strahlungsabsorbierenden Treibmitteln versetzte Polymere eingesetzt werden.

27. Verfahren nach Anspruch 25 oder 26, **dadurch gekennzeichnet, daß** die Partikel (6) mit einem strahlungsabsorbierenden Medium beschichtet oder benetzt werden.

28. Verfahren nach einem der Ansprüche 1 bis 27 zur Herstellung von Innenverkleidungen, Motorraum- oder Karosserieteilen von Kraftfahrzeugen.

29. verfahren nach einem der Ansprüche 1 bis 27 zur Herstellung von Möbeln, insbesondere Gartenmöbeln.

30. Verfahren nach einem der Ansprüche 1 bis 27 zur Herstellung von Sportgeräten, wie Surfbrettern, Wellengleitern oder Bootskörpern.

31. Verfahren nach einem der Ansprüche 1 bis 27 zur Herstellung von Gehäusen und Isolationsbehältern.

## Claims

1. Method for producing moulded parts (1) made of particle foam (2) from polymer foam particles, which are melted together at least on the surface and have a closed surface, and at least one covering layer (3), formed from at least one polymer, in a mould (4), said method having the following steps:
a) filling the mould cavity (4c) of the mould (4) with particles (6) of at least one foamed, pre-foamed and/or expandable thermoplastic and/or thermoelastic polymer;
b) thermally bonding the particles (6) to form a preform part;
c) introducing the polymer, which forms the covering layer (3) of the moulded part (1), in liquid phase between the preform part and at least one surface of the cavity (4c) of the mould (4);
d) curing the liquid polymer introduced into the mould cavity (4c) on the surface of the preform part, forming a bond incorporated in the material;
e) cooling the moulded part (1) produced in this way and removing same from the mould (4).

2. Method according to claim 1, **characterised in that** the polymer forming the covering layer (3) is introduced into the mould cavity (4c) under pressure.

3. Method according to claim 1 or 2, **characterised in that** the mould (4) is opened before the introduction of the polymer which forms the covering layer (3), forming a gap between at least one surface of the preform part and at least one surface of the cavity (4c) of the mould (4).

4. Method according to claim 3, **characterised in that** the liquid polymer for the covering layer (3), which is introduced into the gap, is cured with renewed, at least partial closing of the mould (4).

5. Method according to one of claims 1 to 4, **characterised in that**, before the mould (4) is filled with the particles (6), a slide (4d) is arranged which protrudes at least partially into the mould cavity (4c), and, after the thermal bonding of the particles (7) to form the preform part and before the introduction of the polymer which forms the covering layer (3), forming a gap between at least one surface of the preform part and at least one surface of the cavity (4c) of the mould (4), the slide is withdrawn from the mould cavity (4c).

6. Method according to one of claims 1 to 5, **characterised in that** the covering layer (3) is applied substantially to the entire surface of the preform part.

7. Method according to one of claims 1 to 5, **characterised in that** the covering layer (3) is only applied to a portion of the surface of the preform part.

8. Method according to one of claims 1 to 7, **characterised in that** the surface of the preform part which is coated with the covering layer (3) is set by the pressure of the liquid polymer introduced between the preform part and the surface of the mould cavity (4c), and/or by the local arrangement and number of runners (8a, 8b) in the mould (4).

9. Method according to one of claims 1 to 8, **characterised in that**, for the covering layer (3), at least one molten thermoplastic and/or thermoelastic polymer is introduced into the mould cavity (4c) and cured.

10. Method according to claim 9, **characterised in that**, for the covering layer (3), thermoplastic or thermoelastic polymers mixed with physical and/or chemical foaming agents which can be thermally activated are used, and the foaming agent is activated as it is introduced into the mould cavity (4c) or immediately thereafter.

11. Method according to one of claims 1 to 8, **characterised in that**, for the covering layer, liquid monomers, dimers and/or oligomers of at least one thermoplastic and/or thermoelastic polymer are introduced into the mould cavity (4c) and cured by polymerisation.

12. Method according to claim 11, **characterised in that** polymers in powder form are dispersed into the liquid monomers, dimers and/or oligomers.

13. Method according to claim 11 or 12, **characterised in that** physical and/or chemical foaming agents which can be thermally activated are added to the liquid monomers, dimers and/or oligomers and/or to the powder-form polymers dispersed in same, and the foaming agent is activated during the polymerisation.

14. Method according to one of claims 1 to 13, **characterised in that** first a polymer forming an intermediate layer is introduced in liquid phase between the preform part and the surface of the mould cavity and cured on the surface of the preform part, and then the mould (4) is opened forming a gap between the free surface of the intermediate layer and the surface of the mould cavity and the polymer which forms the covering layer (3) is applied in liquid phase to the intermediate layer and cured.

15. Method according to claim 14, **characterised in that** polymers which are free of foaming agent are used for the covering layer (3) and polymers to which at least one foaming agent has been added are used for the intermediate layer lying below the covering layer.

16. Method according to claim 14 or 15, **characterised in that** reinforcing fibres are added to the polymer which forms the intermediate layer.

17. Method according to one of claims 1 to 16, **characterised in that** reinforcing fibres are added to the polymer which forms the covering layer (3).

18. Method according to one of claims 1 to 17, **characterised in that** reinforcing fibres are added to the particles (6) and/or particles containing such fibres are used.

19. Method according to one of claims 1 to 18, **characterised in that** the same polymers as for the particle foam (2) or polymer mixtures containing such polymers are used for the covering layer (3) and possibly for the intermediate layer.

20. Method according to one of claims 1 to 19, **characterised in that** the material of the particle foam (2) is selected from the group EPE, EPP and EPS and the material of the covering layer (3) and possibly of the intermediate layer is selected from the group EP, PP and PS.

21. Method according to one of claims 1 to 20, **characterised in that** the particles (6) of a pre-foamed and/or expandable polymer are foamed during the thermal bonding.

22. Method according to one of claims 1 to 21, **characterised in that** a mould-parting agent is first applied to the surface of the cavity (4c) of the mould (4) and/or the polymer which forms the covering layer (3) is provided with such an agent.

23. Method according to one of claims 1 to 22, **characterised in that** the covering layer (3) of the moulded part (1) is provided at least in regions with a surface structure by means of a structured surface of the cavity (4c) of the mould (4).

24. Method according to one of claims 1 to 23, **characterised in that** superheated steam is used for thermally bonding the foamed particles (6).

25. Method according to one of claims 1 to 23, **characterised in that** high-frequency electromagnetic radiation, especially microwave radiation, is used for thermally bonding the foamed particles (6).

26. Method according to claim 25, **characterised in that** radiation-absorbing polymers and/or polymers mixed with radiation-absorbing foaming agents are used.

27. Method according to claim 25 or 26, **characterised in that** the particles (6) are coated or sprinkled with a radiation-absorbing agent.

28. Method according to one of claims 1 to 27 for the production of interior trims, engine compartment parts or bodywork parts for automotive vehicles.

29. Method according to one of claims 1 to 27 for the production of furniture, especially garden furniture.

30. Method according to one of claims 1 to 27 for the production of sports equipment such as surf-boards, wave gliders or boat hulls.

31. Method according to one of claims 1 to 27 for the production of housings and insulation containers.

## Revendications

1. Procédé pour fabriquer dans un moule (4) des pièces moulées (1) en mousse de particules (2) constituée de particules de mousse en polymère qui sont fondues ensemble au moins en surface et dont la surface est fermée, et d'au moins une couche de recouvrement (3) constituée d'au moins un polymère, selon les étapes suivantes :
a) remplir la chambre (4c) du moule (4) à l'aide de particules (6) constituées d'au moins un polymère thermoplastique et/ou thermoélastique moussé, prémoussé et/ou moussant,
b) lier thermiquement les particules (6) pour obtenir une pièce prémoulée,
c) introduire en phase liquide le polymère qui forme la couche de recouvrement (3) de la pièce moulée (1) entre la pièce prémoulée et au moins une surface de la chambre de moule (4c) du moule (4),
d) durcir sur la surface de la pièce prémoulée le polymère liquide introduit dans la chambre (4c) en obtenant un composé par combinaison de matériau,
e) refroidir la pièce moulée (1) produite de cette manière et la retirer du moule (4).

2. Procédé selon la revendication 1,
**caractérisé en ce que**
le polymère qui forme la couche de recouvrement (3) est introduit sous pression dans la chambre de moule (4c).

3. Procédé selon la revendication 1 ou 2,
**caractérisé en ce que**
avant d'introduire le polymère qui forme la couche de recouvrement (3), le moule (4) est ouvert en formant un espace intermédiaire entre au moins une surface de la pièce prémoulée et au moins une surface de la chambre (4c) du moule (4).

4. Procédé selon la revendication 3,
**caractérisé en ce que**
le polymère liquide, introduit dans l'espace intermédiaire et destiné à la couche de recouvrement (3), est durci en refermant le moule (4) au moins en partie.

5. Procédé selon l'une des revendications 1 à 4,
**caractérisé en ce qu'**
avant de remplir le moule (4) avec les particules (6), on place un coulisseau (4d) qui dépasse en partie à l'intérieur de la chambre de moule (4c) et on retire le coulisseau (4d) de la chambre de moule (4c) après que les particules (7) se sont liées thermiquement pour obtenir la pièce prémoulée et avant d'introduire le polymère qui constitue la couche de recouvrement en formant un espace intermédiaire entre au moins une surface de la pièce prémoulée et au moins une surface de la chambre (4c) du moule (4).

6. Procédé selon l'une des revendications 1 à 5,
**caractérisé en ce que**
la couche de recouvrement (3) est appliquée sur presque toute la surface de la pièce prémoulée.

7. Procédé selon l'une des revendications 1 à 5,
**caractérisé en ce que**
la couche de recouvrement (3) est uniquement appliquée sur une partie de la surface de la pièce prémoulée.

8. Procédé selon l'une des revendications 1 à 7,
**caractérisé en ce que**
la surface ― de la pièce prémoulée ― recouverte de la couche de recouvrement (3) est déterminée par la pression du polymère liquide introduit entre la pièce prémoulée et la surface de la chambre de moule (4c) et/ou par la disposition locale et le nombre des canaux d'injection (8a, 8b) du moule (4).

9. Procédé selon l'une des revendications 1 à 8,
**caractérisé en ce que**
pour la couche de recouvrement (3), au moins un polymère fondu thermoplastique et/ou thermoélastique est introduit et durci dans la chambre de moule (4c).

10. Procédé selon la revendication 9,
**caractérisé en ce que**
pour la couche de recouvrement (3), on utilise des polymères thermoplastiques ou thermoélastiques mélangés à des produits moussants physiques et/ou chimiques thermiquement activables et le produit moussant est activé pendant qu'on l'introduit dans la chambre de moule (4c) ou immédiatement après.

11. Procédé selon l'une des revendications 1 à 8,
**caractérisé en ce que**
pour la couche de recouvrement (3), des monomères, des dimères et/ou des oligomères d'au moins un polymère thermoplastique ou thermoélastique sont introduits dans la chambre de moule (4c) et sont durcis par polymérisation.

12. Procédé selon la revendication 11,
**caractérisé en ce que**
des polymères pulvérulents sont dispersés dans les monomères, les dimères et/ou les oligomères liquides.

13. Procédé selon la revendication 11 ou 12,
**caractérisé en ce que**
des produits moussants physiques et/ou chimiques thermiquement activables sont ajoutés aux monomères, aux dimères et/ou aux oligomères liquides et/ou aux polymères pulvérulents qui y sont dispersés et le produit moussant est activé pendant la polymérisation.

14. Procédé selon l'une des revendications 1 à 13,
**caractérisé en ce que**
d'abord un polymère qui forme une couche intermédiaire est introduit en phase liquide entre la pièce prémoulée et la surface de la chambre de moule et est durci à la surface de la pièce prémoulée et ensuite le moule (4) est ouvert en formant un espace intermédiaire entre la surface libre de la couche intermédiaire et la surface de la chambre de moule et le polymère qui constitue la couche de recouvrement (3) est appliqué en phase liquide sur la couche intermédiaire et est durci.

15. Procédé selon la revendication 14,
**caractérisé en ce qu'**
on utilise des polymères sans produit moussant pour la couche de recouvrement (3) et des polymères mélangés à au moins un produit moussant pour la couche intermédiaire située au-dessous.

16. Procédé selon la revendication 14 ou 15,
**caractérisé en ce que**
des fibres de renforcement sont ajoutées au polymère qui forme la couche intermédiaire.

17. Procédé selon l'une des revendications 1 à 16,
**caractérisé en ce que**
des fibres de renforcement sont ajoutées au polymère qui forme la couche de recouvrement (3).

18. Procédé selon l'une des revendications 1 à 17,
**caractérisé en ce qu'**
on ajoute des fibres de renforcement aux particules (6) et/ou on utilise des particules qui les contiennent.

19. Procédé selon l'une des revendications 1 à 18,
**caractérisé en ce qu'**
on utilise pour la couche de recouvrement (3) et éventuellement pour la couche intermédiaire les mêmes polymères que pour la mousse de particules (2) ou on utilise des mélanges de polymères qui les contiennent.

20. Procédé selon l'une des revendications 1 à 19,
**caractérisé en ce que**
le matériau de la mousse de particules (2) est choisi parmi le groupe du PE expansé, du PP expansé et du PS expansé et le matériau de la couche de recouvrement (3) et éventuellement de la couche intermédiaire parmi le groupe du PE, du PP et du PS.

21. Procédé selon l'une des revendications 1 à 20,
**caractérisé en ce que**
les particules (6) en un polymère moussé et/ou prémoussé sont moussées pendant la combinaison thermique.

22. Procédé selon l'une des revendications 1 à 21,
**caractérisé en ce qu'**
un agent de démoulage est d'abord appliqué sur la surface de la chambre (4c) du moule (4) et/ou le polymère qui forme la couche de recouvrement (3) en est muni.

23. Procédé selon l'une des revendications 1 à 22,
**caractérisé en ce que**
la couche de recouvrement (3) de la pièce moulée (1) à l'aide d'une surface structurée de la chambre de moule (4c) est munie au moins par endroits d'une structure superficielle.

24. Procédé selon l'une des revendications 1 à 23,
**caractérisé en ce qu'**
on utilise de la vapeur surchauffée pour combiner thermiquement les particules (6) moussées.

25. Procédé selon l'une des revendications 1 à 23,
**caractérisé en ce qu'**
on utilise un rayonnement électromagnétique à haute fréquence, en particulier le rayonnement à micro-ondes, pour combiner thermiquement les particules (6) moussées.

26. Procédé selon la revendication 25,
**caractérisé en ce qu'**
on utilise des polymères qui absorbent les rayonnements et/ou des polymères mélangés à des produits moussants qui absorbent les rayonnements.

27. Procédé selon la revendication 25 ou 26,
**caractérisé en ce que**
les particules (6) sont revêtues ou humectées à l'aide d'un agent qui absorbe les rayonnements.

28. Procédé selon l'une des revendications 1 à 27, pour fabriquer des revêtements intérieurs, des pièces de l'espace moteur ou de la carrosserie dans des véhicules automobiles.

29. Procédé selon l'une des revendications 1 à 27, pour fabriquer des meubles, en particulier des meubles de jardin.

30. Procédé selon l'une des revendications 1 à 27, pour fabriquer du matériel de sport comme des planches de surf, des aquaplanes ou des corps de bateaux.

31. Procédé selon l'une des revendications 1 à 27, pour fabriquer des boîtiers et des récipients isolants.
